(19) Europäisches Patentamt
European Patent Office
Office européen des brevets

(11) EP 2 180 570 B1

(12) EUROPÄISCHE PATENTSCHRIFT

(45) Veröffentlichungstag und Bekanntmachung des Hinweises auf die Patenterteilung:
10.10.2018 Patentblatt 2018/41

(51) Int Cl.:
H02J 1/00 (2006.01)　　　H02M 3/155 (2006.01)

(21) Anmeldenummer: 08021122.0

(22) Anmeldetag: 04.12.2008

(54) **Aktive elektrische Koppelvorrichtung**

Active electric coupling device

Dispositif de couplage actif électrique

(84) Benannte Vertragsstaaten:
AT BE BG CH CY CZ DE DK EE ES FI FR GB GR HR HU IE IS IT LI LT LU LV MC MT NL NO PL PT RO SE SI SK TR

(30) Priorität: 09.09.2008 GB 0816473

(43) Veröffentlichungstag der Anmeldung:
28.04.2010 Patentblatt 2010/17

(73) Patentinhaber: Delphi Technologies, Inc.
Troy MI 48007 (US)

(72) Erfinder:
• **Herlitz, Martin**
42879 Remscheid (DE)
• **Rucks, Michael**
58239 Schwerte (DE)

(74) Vertreter: **Robert, Vincent et al**
**Aptiv Services France SAS**
**Aptiv EMEA Patent Department**
**Bâtiment Le Raspail - Paris Nord 2**
**22, avenue des Nations**
**CS 65059 Villepinte**
**95972 Roissy CDG Cedex (FR)**

(56) Entgegenhaltungen:
WO-A1-02/17460　　US-A1- 2008 050 971

EP 2 180 570 B1

**Beschreibung**

Die vorliegende Erfindung betrifft eine aktive elektrische Koppelvorrichtung zur Verwendung in einem Kraftfahrzeug.

Moderne Kraftfahrzeuge werden zunehmend mit aufwändigen Systemen zur Unterhaltung der Fahrzeuginsassen ausgestattet. Diese Systeme bieten in der Regel unter anderem auch die Möglichkeit, tragbare Geräte an die Unterhaltungssysteme anzukoppeln, um dazwischen Information austauschen zu können. Beispielsweise können MP3-Player, USB-Sticks, Festplatten usw. mit einem fahrzeugeigenen Unterhaltungssystem gekoppelt werden, wobei zu diesem Zweck in der Regel eine USB-Schnittstelle des als Host-System dienenden Unterhaltungssystems verwendet wird. Die Kopplung erfolgt dabei oft mit Hilfe eines oder mehrerer Kabelsegmente mit einem abschließenden "Consumer Port", an welchen das tragbare Gerät, eventuell über ein "Consumer-Kabel", gekoppelt wird.

Einige tragbare Geräte benötigen für ihren Betrieb vergleichsweise viel Energie, was dazu führen kann, dass die Versorgung dieser Geräte über eine USB-Schnittstelle, der gemäß Spezifikation maximal 500 mA Strom bei 5V Gleichspannung entnommen werden können, problematisch wird. Insbesondere kann ein Spannungsabfall, der durch einen Leitungswiderstand eines Kabels zur Kopplung eines derartigen tragbaren Geräts mit dem Unterhaltungssystem verursacht wird, ausreichen, um die von dem tragbaren Gerät benötigte Spannung und/oder Energie so stark abzusenken, dass ein korrekter Betrieb des tragbaren Geräts beeinträchtigt wird.

Zwar wäre es prinzipiell möglich, das tragbare Gerät nicht über die USB-Schnittstelle, sondern über ein separates Netzteil mit Energie zu versorgen. Dies erweist sich aber gerade bei einer Verwendung in Kraftfahrzeugen als unpraktisch.

Zur Bewältigung dieses Problems wurden bereits einige Lösungen vorgeschlagen. So besteht eine einfache Maßnahme darin, den Leitungsquerschnitt des Koppelkabels zu erhöhen, um damit den Leitungswiderstand und folglich den potentiell auftretenden Spannungsabfall zu verringern. Diese Lösung führt jedoch zu teureren und unflexibleren Kabeln und kann nicht garantieren, dass das Problem damit beseitigt wird.

Bekannt sind auch so genannte USB-Y-Kabel, beispielsweise das bei der Firma Hama GmbH&Co. KG, Monheim erhältliche USB-Y-Kabel mit der Artikelnummer 00039748. Kabel dieser Art verwenden zwei USB-Anschlüsse, um den Strom, der an das tragbare Gerät geliefert werden kann, über die pro Anschluss maximal mögliche Stromentnahme von 500 mA hinaus bis auf maximal 1 A zu erhöhen. Gegen einen Spannungsabfall im Kabel selbst werden jedoch keine Maßnahmen ergriffen.

Ferner sind aktive USB-Verlängerungskabel verfügbar, beispielsweise unter der Artikelnummer 00042070 bei der Firma Hama GmbH&Co. KG, Monheim. Dieser Kabeltyp ermöglicht die Verlängerung eines USB-Anschlusses, indem ausschließlich die Signale auf den Datenleitungen des USB-Verlängerungskabels aufgefrischt und/oder verstärkt werden, um die Übertragungsqualität der Datensignale sicherzustellen. Ein an den Versorgungsleitungen des Kabels auftretender Spannungsabfall wird dabei nicht berücksichtigt.

In der WO 02/17460 A1 ist ein Ladekabel für Mobiltelefone offenbart, das eine aktive elektrische Koppelvorrichtung mit einem ersten und zweiten Verbinder sowie einer sich dazwischen erstreckenden Anzahl von Leitungen zur Übertragung von Energie und Datensignalen umfasst. Die aktive elektrische Koppelvorrichtung weist ferner eine zwischen den ersten Verbinder und den zweiten Verbinder geschaltete elektronische Schaltung auf, die mit der Anzahl von Leitungen zur Übertragung von Energie verbunden und ausgestaltet ist, um an dem zweiten elektrischen Verbinder eine Ausgangsspannung aufrecht zu erhalten, die kleiner als eine Eingangsspannung ist, die an dem ersten elektrischen Verbinder anliegt.

Die Aufgabe der Erfindung besteht somit darin, eine Koppelvorrichtung zur Verwendung in Kraftfahrzeugen zu schaffen, mit der sichergestellt werden kann, dass ein tragbares Gerät, eventuell inklusive eines Consumer-Kabels, das durch die Koppelvorrichtung mit einem Unterhaltungssystem eines Kraftfahrzeugs gekoppelt ist, ausreichend mit Spannung versorgt wird.

Diese Aufgabe wird durch eine aktive elektrische Koppelvorrichtung mit den Merkmalen des Anspruchs 1 und insbesondere dadurch gelöst, dass zwischen die beiden elektrischen Verbinder eine elektronische Schaltung geschaltet ist, die mit Leitungen der Anzahl von Leitungen zur Übertragung von Energie verbunden ist, wobei die elektronische Schaltung so ausgestaltet ist, dass sie an dem zweiten elektrischen Verbinder eine konstante Ausgangsspannung aufrechterhält, die einer Eingangsspannung entspricht, die an dem ersten elektrischen Verbinder anliegt.

Durch die erfindungsgemäße aktive elektrische Koppelvorrichtung wird auf vorteilhafte Weise eine konstante Ausgangsspannung ohne einen Spannungsabfall an der Koppelvorrichtung derart gewährleistet, dass die Ausgangsspannung, die an dem zweiten elektrischen Verbinder anliegt, mindestens gleich der Eingangsspannung ist, die an dem ersten elektrischen Verbinder anliegt. Wenn es sich bei der Eingangsspannung, die an dem ersten elektrischen Verbinder anliegt, um eine geregelte Spannung handelt, wie es beispielsweise bei USB-Hostausgängen der Fall ist, dann ist folglich auch die Ausgangsspannung, die an dem zweiten elektrischen Verbinder und einem damit gekoppelten Consumer Port anliegt, geregelt und weist somit stets mindestens die gleiche Größe wie die Eingangsspannung auf. Da im Wesentlichen kein Spannungsabfall über der erfindungsgemäßen aktiven elektrischen Koppelvorrichtung bzw. zwischen den beiden Verbindern auftritt, ist die aktive elektrische Koppelvorrichtung aus Sicht der Spannungsversorgung eines an dem zweiten elektrischen Verbinder bzw. einem damit gekoppelten Consumer Port angeschlossenen tragbaren Geräts "transparent", d.h. die aktive elektrische Koppelvorrichtung weist keine Auswirkungen auf den Pegel der Spannungsversorgung eines an dem zweiten elektrischen Verbinder angeschlossenen tragbaren Geräts auf. Dies ist insbesondere bei tragbaren Geräten von Vorteil, die anfällig für Spannungsschwankungen sind.

Ein weiterer Vorteil besteht darin, dass bei der erfindungsgemäßen aktiven elektrischen Koppelvorrichtung ein verringerter Leitungsquerschnitt verwendet und somit die Länge der Leitungen variiert werden kann, was kostengünstige und elegante Entwürfe erleichtert.

Ferner kann der Consumer Port als eine separate, passive Komponente ausgeführt werden, die im Servicefall leicht ausgetauscht werden kann.

Bevorzugte Ausführungsformen der aktiven elektrischen Koppelvorrichtung ergeben sich aus der folgenden Beschreibung, den Zeichnungen sowie den Ansprüchen.

Gemäß einer ersten Variante beispielhafter Ausführungsformen weist die Koppelvorrichtung ferner einen dritten elektrischen Verbinder auf, der mit der elektronischen Schaltung verbunden ist, um die elektronische Schaltung mit einer zusätzlichen Spannung zu versorgen. Die Versorgung mit einer zusätzlichen Spannung ermöglicht es der elektronischen Schaltung, die Ausgangsspannung an dem zweiten elektrischen Verbinder und einem damit gekoppelten Consumer Port so bereitzustellen, dass ein an dem zweiten elektrischen Verbinder zur Verfügung stehender Ausgangsstrom im Vergleich zu einem an dem ersten elektrischen Verbinder zur Verfügung stehenden Eingangsstrom nicht begrenzt ist. Dies ist besonders vorteilhaft, wenn die aktive elektrische Koppelvorrichtung zur Kopplung von Geräten mit hohem Energiebedarf an einem Kraftfahrzeug-Unterhaltungssystem verwendet wird. Zudem wird bei diesen Ausführungsformen die Energieversorgung des Hosts nicht beeinträchtigt.

Bei einer bevorzugten Ausführungsform der aktiven elektrischen Koppelvorrichtung mit einem dritten elektrischen Verbinder umfasst die elektronische Schaltung bevorzugt eine Pufferschaltung, welche die Ausgangsspannung unter Verwendung der zusätzlichen Spannung so steuern kann, dass sie der Eingangsspannung an dem ersten elektrischen Verbinder entspricht. Dabei kann die Pufferschaltung so ausgelegt sein, dass sie einen Spannungsabfall zwischen der Eingangsspannung an dem ersten elektrischen Verbinder und einer Eingangsspannung der elektronischen Schaltung und/oder einen Spannungsabfall zwischen einer Ausgangsspannung der elektronischen Schaltung und der Ausgangsspannung an dem zweiten elektrischen Verbinder bzw. einem damit gekoppelten Consumer Port kompensiert. Mit Hilfe der Pufferschaltung können somit auf einfache Weise sämtliche möglicherweise an der aktiven elektrischen Koppelvorrichtung auftretenden Spannungsabfälle kompensiert werden. Da die Leitungswiderstände und damit die möglichen Spannungsabfälle durch den Aufbau der aktiven elektrischen Koppelvorrichtung festgelegt sind, kann die Pufferschaltung durch wenige Bauteile kostengünstig realisiert werden, da von im Wesentlichen unveränderlichen Werten ausgegangen werden kann. Die jeweiligen Leitungswiderstände hängen unter anderem von dem verwendeten Material (z.B. Kupfer), der Leitungslänge, dem Leitungsdurchmesser und der Anordnung der elektronischen Schaltung auf den Leitungen zwischen dem ersten elektrischen Verbinder und dem zweiten elektrischen Verbinder sowie ggf. der Kopplung mit dem Consumer Port ab, wobei die Anordnung der elektronischen Schaltung frei wählbar ist und beispielsweise bei dem ersten elektrischen Verbinder, bei dem zweiten elektrischen Verbinder oder an einer beliebigen Stelle dazwischen liegen kann.

Unter einer Pufferschaltung wird im Rahmen dieser Anmeldung eine elektronische Schaltung mit hoher Eingangsimpedanz verstanden, welche eine Ausgangsspannung der Pufferschaltung gemäß einer Eingangsspannung der Pufferschaltung steuert. Der Pegel der Ausgangsspannung der Pufferschaltung kann dabei gleich oder etwas höher als der Pegel der Eingangsspannung an der Pufferschaltung sein, um mögliche Spannungsabfälle zu kompensieren. Eine zusätzliche Versorgungsspannung wird nach Bedarf zu- und abgeschaltet, um den Pegel der Ausgangsspannung der Pufferschaltung auf dem gewünschten Wert zu halten. Da die Pufferschaltung bei der Steuerung ihrer Ausgangsspannung der Eingangsspannung folgt, die an der Pufferschaltung anliegt, wird sie eine geregelte Ausgangsspannung liefern, wenn die Eingangsspannung geregelt ist, ohne selbst einen kostspieligen Regler zu enthalten.

Bei einer Ausführungsform der aktiven elektrischen Koppelvorrichtung ist die Pufferschaltung durch eine Spannungsfolgerschaltung realisiert, welche eine Ausgangsspannung liefert, deren Pegel im Wesentlichen gleich dem Pegel der Eingangsspannung ist.

Bei bevorzugten Ausführungsformen der aktiven elektrischen Koppelvorrichtung stammt die zusätzliche Spannung, die von der Pufferschaltung verwendet wird, zumindest mittelbar von einer Fahrzeugbatterie.

Bei einer alternativen Variante bevorzugter Ausführungsformen der aktiven elektrischen Koppelvorrichtung wird auf einen dritten elektrischen Verbinder verzichtet und stattdessen in der elektronischen Schaltung ein Aufwärtswandler eingesetzt. Bei diesen Ausführungsformen ist die aktive elektrische Koppelvorrichtung leichter handhabbar, da nur zwei Verbinder gekoppelt werden müssen, um ein tragbares Gerät mit einem Kraftfahrzeug-Unterhaltungssystem zu verbinden (der erste elektrische Verbinder wird mit dem USB-Anschluss des Unterhaltungssystems bzw. Hostsystems verbunden und der zweite elektrische Verbinder ggf. über einen Consumer Port mit einem USB-Anschluss eines tragbaren Geräts). Zudem kann diese Ausführungsform sehr kostengünstig hergestellt werden. Es ist jedoch möglich, dass ein an dem zweiten elektrischen Verbinder verfügbarer Ausgangsstrom kleiner ist als ein Eingangsstrom, der an dem ersten elektrischen Verbinder zur Verfügung steht.

Bevorzugte Ausgestaltungen der alternativen Ausführungsform der aktiven elektrischen Koppelvorrichtung verwenden einen Aufwärtswandler, der ausgestaltet ist, um einen Spannungsabfall zwischen der Eingangsspannung an dem ersten elektrischen Verbinder und einer Eingangsspannung der elektronischen Schaltung und/oder einen Spannungsabfall zwischen einer Ausgangsspannung der elektronischen Schaltung und der Ausgangsspannung an dem zweiten elektrischen Verbinder bzw. einem Consumer Port zu kompensieren.

Mit Hilfe des Aufwärtswandlers können somit auf einfache Weise sämtliche möglicherweise an der aktiven elektrischen Koppelvorrichtung auftretende Spannungsabfälle kompensiert werden. Da die Leitungswiderstände und damit die möglichen Spannungsabfälle durch den Aufbau der aktiven elektrischen Koppelvorrichtung festgelegt sind, lässt sich der Aufwärtswandler mit wenigen Bauteilen kostengünstig realisieren, da von im Wesentlichen unveränderlichen Werten ausgegangen werden kann. Die jeweiligen Leitungswiderstände hängen unter anderem von dem verwendeten Material (z.B. Kupfer), der Leitungslänge, dem Leitungsdurchmesser und der Anordnung der elektronischen Schaltung auf den Leitungen zwischen dem ersten elektrischen Verbinder und dem zweiten elektrischen Verbinder ab, wobei die Anordnung der elektronischen Schaltung frei wählbar ist und beispielsweise bei dem ersten elektrischen Verbinder, bei dem zweiten elektrischen Verbinder oder an einer beliebigen Stelle dazwischen liegen kann.

Eine Ausgestaltung der alternativen Ausführungsform der aktiven elektrischen Koppelvorrichtung verwendet in der elektronischen Schaltung einen DC/DC-Wandler. Dieser kann für eine zusätzliche Regelung der Ausgangsspannung an dem zweiten elektrischen Verbinder sorgen.

Wie bereits erwähnt, kann es bei Ausgestaltungen der alternativen Ausführungsform der aktiven elektrischen Koppelvorrichtung vorkommen, dass ein an dem zweiten elektrischen Verbinder verfügbarer Ausgangsstrom kleiner ist als ein Eingangsstrom, der an dem ersten elektrischen Verbinder zur Verfügung steht. Somit kann es sein, dass die aktive elektrische Koppelvorrichtung bei der alternativen Ausführungsform nicht die gesamte theoretisch mögliche Energie übertragen kann. Es wird daher in Betracht gezogen, die Begrenzung der USB-Schnittstelle bezüglich des maximal zulässigen Stroms bei Kraftfahrzeuganwendungen zu verändern, um einem tragbaren Gerät auch bei einer Verwendung der alternativen Ausführungsform der aktiven elektrischen Koppelvorrichtung genügend Energie liefern zu können.

Die vorliegende Erfindung wird im Folgenden anhand von beispielhaften Ausführungsformen unter Bezugnahme auf die beiliegenden Zeichnungen genauer erläutert, in denen:

Fig. 1 eine perspektivische Ansicht des äußeren Aufbaus einer ersten Ausführungsform der aktiven elektrischen Koppelvorrichtung zeigt, die einen dritten elektrischen Verbinder aufweist;

Fig. 2 eine perspektivische Ansicht des Gehäuses der elektronischen Schaltung und einer Anbindung des dritten elektrischen Verbinders gemäß einer Variante der ersten Ausführungsform der aktiven elektrischen Koppelvorrichtung zeigt;

Fig. 3 eine perspektivische Ansicht einer Ausgestaltung der elektronischen Schaltung der ersten Ausführungsform der aktiven elektrischen Koppelvorrichtung ohne Gehäuse zeigt;

Fig. 4 eine perspektivische Ansicht der Ausgestaltung von Fig. 3 mit einer Abschirmung zeigt;

Fig. 5 eine perspektivische Ansicht des äußeren Aufbaus einer zweiten Ausführungsform der aktiven elektrischen Koppelvorrichtung zeigt, bei der die elektronische Schaltung an dem zweiten Verbinder angeordnet ist;

Fig. 6 eine perspektivische Ansicht einer Ausgestaltung der elektronischen Schaltung der zweiten Ausführungsform der aktiven elektrischen Koppelvorrichtung ohne Gehäuse zeigt;

Fig. 7 die Konturen einer Platine schematisch zeigt, die den zweiten elektrischen Verbinder und die elektronische Schaltung einer Ausgestaltung der elektronischen Schaltung der zweiten Ausführungsform der aktiven elektrischen Koppelvorrichtung umfasst;

Fig. 8 eine perspektivische Ansicht des äußeren Aufbaus einer dritten Ausführungsform der aktiven elektrischen Koppelvorrichtung zeigt;

Fig. 9 eine perspektivische Ansicht des äußeren Aufbaus einer vierten Ausführungsform der aktiven elektrischen Koppelvorrichtung zeigt;

Fig. 10 ein Prinzipschaltbild einer Koppelvorrichtung nach dem Stand der Technik zeigt;

Fig. 11　ein Prinzipschaltbild der elektronischen Schaltung für die erste und zweite Ausführungsform der aktiven elektrischen Koppelvorrichtung zeigt;

Fig. 12a　ein Prinzipschaltbild einer elektronischen Schaltung für die dritte und vierte Ausführungsform der aktiven elektrischen Koppelvorrichtung zeigt; und

Fig. 12b　ein Prinzipschaltbild einer alternativen elektronischen Schaltung für die dritte und vierte Ausführungsform der aktiven elektrischen Koppelvorrichtung zeigt.

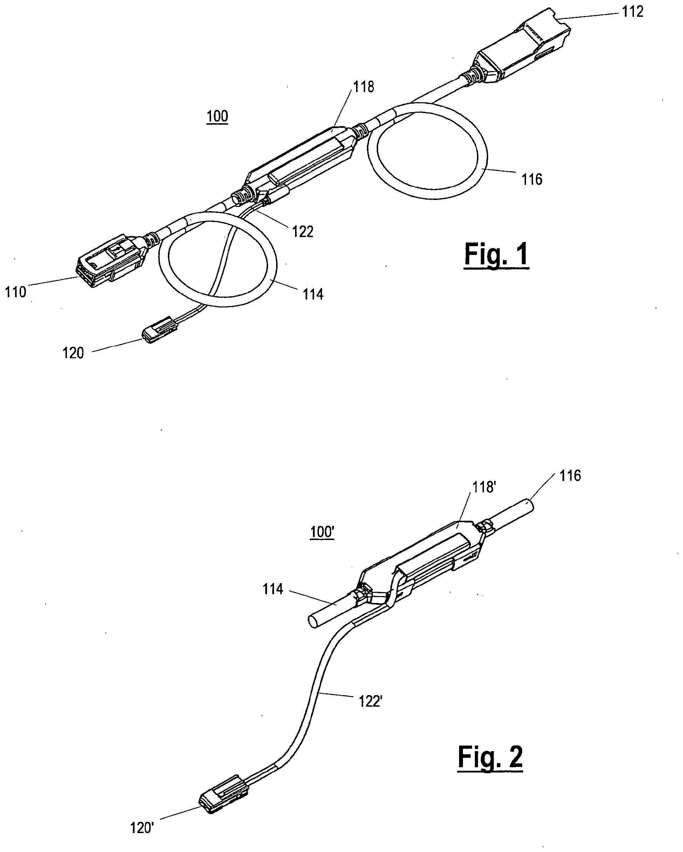

Fig. 1 zeigt eine erste Ausführungsform 100 der aktiven elektrischen Koppelvorrichtung gemäß der vorliegenden Erfindung, welche einen ersten elektrischen Verbinder 110 zur Übertragung von Energie, beispielsweise von einem USB-Host in einem Kraftfahrzeug, und von Datensignalen, beispielsweise von und an den USB-Host in dem Fahrzeug, und einen zweiten Verbinder 112 zum Anschluss eines tragbaren Geräts, das Energie empfangen und Datensignale empfangen und/oder senden kann, ggf. über weitere Kabel- und Verbindungselemente umfasst. Der erste Verbinder 110 ist über ein Kabel 114, das mehrere Leitungen zur separaten Übertragung von Energie und Datensignalen aufweist, mit einer elektronischen Schaltung, die in einem Gehäuse 118 untergebracht ist, elektrisch verbunden. Der zweite Verbinder 112 ist über ein Kabel 116, das ebenfalls mehrere Leitungen zur separaten Übertragung von Energie und Datensignalen aufweist, mit der in dem Gehäuse 118 untergebrachten elektronischen Schaltung elektrisch verbunden.

Die erste Ausführungsform 100 der aktiven elektrischen Koppelvorrichtung von Fig. 1 umfasst ferner einen dritten elektrischen Verbinder 120, der zum Anschluss an eine elektrische Energiequelle, beispielsweise eine 12 Volt Fahrzeugbatterie, vorgesehen ist. Der dritte elektrische Verbinder 120 ist über ein Kabel 122 über eine Seitenwand des Gehäuses 118 mit der in dem Gehäuse 118 untergebrachten elektronischen Schaltung elektrisch verbunden. Das Kabel 122 ist zur Übertragung von elektrischer Energie von der elektrischen Energiequelle an die elektronische Schaltung ausgebildet.

Bei der gezeigten Ausführungsform 100 sind zumindest die elektrischen Verbinder 110 und 112, die Kabel 114 und 116 sowie das Gehäuse 118 so abgeschirmt, dass elektromagnetische Interferenzen keine störenden Einflüsse auf die aktive elektrische Koppelvorrichtung ausüben können.

Die in dem Gehäuse 118 untergebrachte elektronische Schaltung dient dazu, an dem zweiten elektrischen Verbinder 112 eine im Wesentlichen konstante Spannungsversorgung bereitzustellen. Zu diesem Zweck stellt die vorliegende Erfindung einen im Wesentlichen konstanten elektrischen Spannungspegel an dem zweiten elektrischen Verbinder 112 bereit. Der Nutzen dieser Anordnung bei einem Kraftfahrzeug besteht darin, dass ein potentieller Spannungsabfall über der aktiven elektrischen Koppelvorrichtung kompensiert wird und ein an dem zweiten elektrischen Verbinder 112 ggf. über weitere Kabel- und Verbindungselemente angeschlossenes tragbares Gerät für seinen Betrieb somit keine separate Spannungsversorgung benötigt.

Fig. 2 zeigt eine Variante 100' der ersten Ausführungsform der aktiven elektrischen Koppelvorrichtung von Fig. 1. Der elektrische Anschluss des dritten elektrischen Verbinders 120' an die elektronische Schaltung erfolgt bei dieser Variante über eine Oberseite eines Gehäuses 118', in welchem die elektronische Schaltung untergebracht ist. Fig. 1 und Fig. 2 sollen verdeutlichen, dass der Anschluss des dritten elektrischen Verbinders 120 bzw. 120' an verschiedenen Stellen des Gehäuses 118 bzw. 118' möglich ist und nicht auf die beiden in Fig. 1 und 2 gezeigten Varianten beschränkt ist.

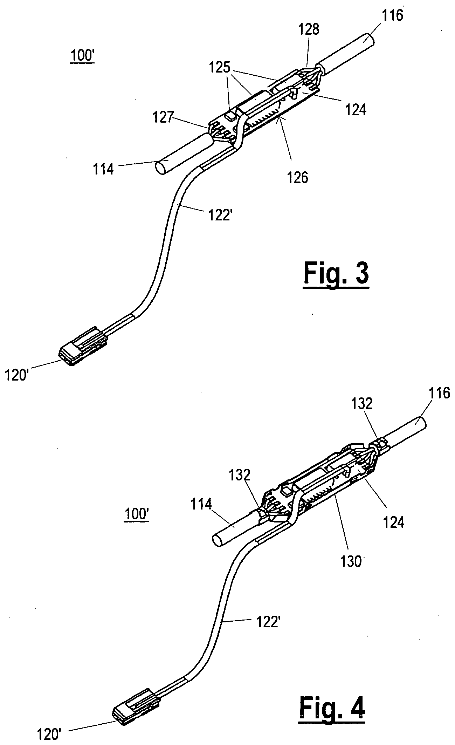

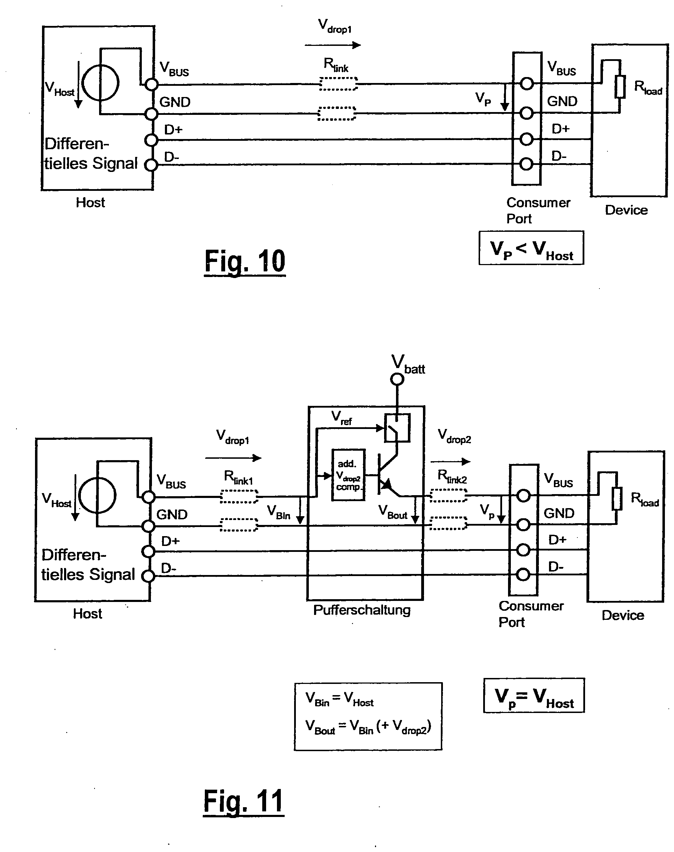

In Fig. 3 wurde das Gehäuse 118' von Fig. 2 entfernt, so dass der Aufbau einer Platine 124 sichtbar ist, welche die elektronische Schaltung 126 umfasst. In Fig. 3 sind mehrere diskrete elektrische Bauelemente 125 schematisch angedeutet, die auf der Platine 124 angeordnet und mit dieser beispielsweise durch einen Lötvorgang elektrisch verbunden sind. Bei den elektrischen Bauelementen 125 kann es sich beispielsweise um Widerstände, Kondensatoren, Induktivitäten, Dioden, Transistoren oder elektronische Schalter und integrierte Schaltungen, wie etwa Operationsverstärker, handeln, die bei dieser ersten Ausführungsform der aktiven elektrischen Koppelvorrichtung zusammen mit der Platine 124 die elektronische Schaltung 126 bilden, welche der voranstehend definierten und in Zusammenhang mit Fig. 11 näher beschriebenen Pufferschaltung entspricht.

Fig. 3 zeigt zudem, dass die Kabel 114 und 116 jeweils 4 Adern oder Leitungen 127 bzw. 128 umfassen, die mit der Platine 124, beispielsweise durch einen Lötvorgang, elektrisch verbunden sind. Bei der gezeigten Ausführungsform sind jeweils zwei der Leitungen 127, 128 zur Übertragung von Energie vorgesehen, und die verbleibenden zwei Leitungen 127, 128 zur Übertragung von Datensignalen. Während die Leitungen 127, 128 zur Übertragung von Datensignalen durch die Platine 124 so durchgeleitet werden, dass Datensignale unverändert übertragen werden, sorgt die elektronische Schaltung 126 dafür, dass die jeweils zwei Leitungen 127, 128 zur Übertragung von Energie bei Bedarf mit zusätzlicher Energie versorgt werden können, die über den dritten Verbinder 120' und das Kabel 122' an die elektronische Schaltung 126 geliefert wird.

Ferner ist aus Fig. 3 ersichtlich, dass das Kabel 122', über das der dritte Verbinder 120' mit der elektronischen Schaltung 126 verbunden ist, zwei Adern oder Leitungen umfasst. Über diese beiden Leitungen wird elektrische Energie, die von einer elektrischen Energiequelle, wie etwa einer Fahrzeugbatterie, stammt, in Form von Gleichspannung an die elektronische Schaltung 126 geliefert, die diese Energie nach Bedarf verwendet, um die Ausgangsspannung an dem zweiten Verbinder 112 (Fig. 1) und einem ggf. damit gekoppelten Consumer Port auf einem im Wesentlichen konstanten Pegel zu halten.

Fig. 4 zeigt eine Abschirmung 130, in welche die Platine 124 von Fig. 3 eingebettet ist. Die Abschirmung 130 ist an den Kabeln 114 und 116 mit Zugentlastungen 132 befestigt, die zusätzlich eine Verbindung der jeweiligen Kabelabschirmungen der Kabel 114 und 116 mit der Abschirmung 130 herstellen. Dies trägt zu einer optimalen Abschirmung der aktiven elektrischen Koppelvorrichtung bei. Zur weiteren Abschirmung kann das Gehäuse 118 von Fig. 1 sowie das Gehäuse 118' von Fig. 2 beispielsweise aus Kunststoff, der an der Gehäuseinnenseite mit einer leitfähigen Schicht beschichtet ist oder metallische Partikel enthält, oder aus einem Metall bestehen.

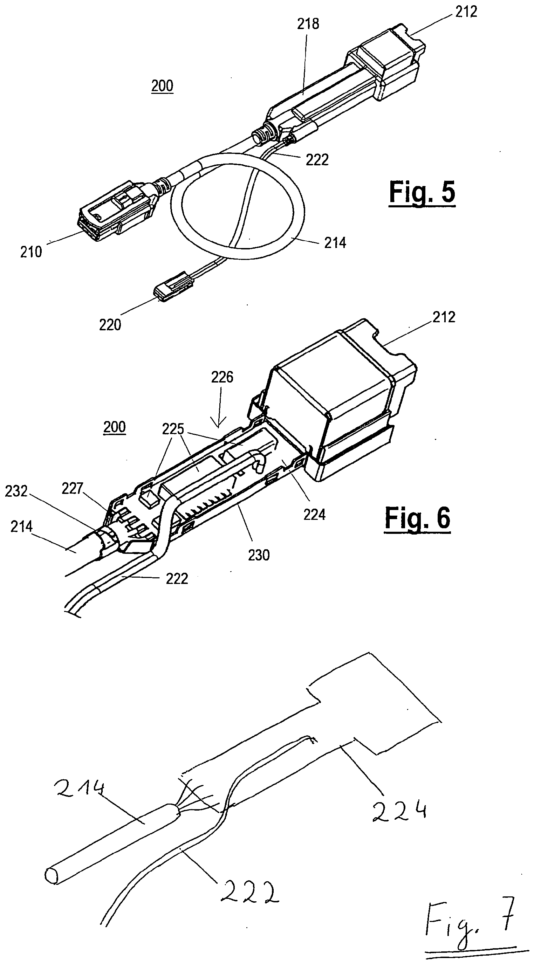

Fig. 5 zeigt eine zweite Ausführungsform 200 der aktiven elektrischen Koppelvorrichtung, die einen ersten elektrischen Verbinder 210, einen zweiten elektrischen Verbinder 212 und ein an den zweiten elektrischen Verbinder 212 angrenzendes Gehäuse 218, in dem eine elektronische Schaltung untergebracht ist, aufweist. Der erste Verbinder 210 ist über ein Kabel 214 mit der in dem Gehäuse 218 untergebrachten elektronischen Schaltung elektrisch verbunden. Das Kabel 214 weist separate Leitungen zur Übertragung von Energie und Datensignalen auf. Ferner ist ein dritter Verbinder 220 über ein Kabel 222 mit der in dem Gehäuse 218 untergebrachten elektronischen Schaltung elektrisch verbunden. Die zweite Ausführungsform 200 der aktiven elektrischen Koppelvorrichtung unterscheidet sich von der in Fig. 1 gezeigten Ausführungsform 100 dadurch, dass hier das Gehäuse 218 zu dem zweiten elektrischen Verbinder 212 verlagert wurde, wodurch das Kabel 116 entfallen kann. Auf diese Weise können die Herstellungskosten für die erfindungsgemäße aktive elektrische Koppelvorrichtung im Vergleich zur ersten Ausführungsform verringert werden, da Konfektionierungskosten für das zweite Kabel entfallen. Bei dieser Ausführungsform ist somit die elektronische Schaltung gewissermaßen im Gehäuse des ersten oder zweiten Verbinders untergebracht.

Fig. 6 zeigt eine Teilansicht der zweiten Ausführungsform 200 der aktiven elektrischen Koppelvorrichtung, wobei das in Fig. 5 gezeigte Gehäuse 218 entfernt wurde, so dass eine Abschirmung 230 und eine darin eingebettete Platine 224 sichtbar wird. Die Abschirmung 230 umgibt bei dieser Ausführungsform neben der Platine 224 auch einen unteren Abschnitt des zweiten elektrischen Verbinders 212 zumindest teilweise. Ferner weist die Abschirmung 230 eine Zugentlastung 232 auf, an welcher das Kabel 214 befestigt ist. Über die Zugentlastung 232 wird auch ein elektrischer Kontakt zwischen der Abschirmung 230 und einer Abschirmung des Kabels 214 hergestellt, um eine optimale Abschirmung der aktiven elektrischen Koppelvorrichtung zu erreichen. Zur weiteren Abschirmung kann das Gehäuse 218 beispielsweise aus Kunststoff, der an der Gehäuseinnenseite mit einer leitfähigen Schicht beschichtet ist oder metallische Partikel enthält, oder aus einem Metall bestehen.

Die Platine 224 ist mit mehreren Bauteilen 225 bestückt und mit diesen elektrisch verbunden, beispielsweise durch einen Lötvorgang, so dass sie zusammen mit der Platine 224 eine elektronische Schaltung 226 bilden, welche der voranstehend definierten und in Zusammenhang mit Fig. 11 näher beschriebenen Pufferschaltung entspricht.

Mit der Platine 224 sind ferner vier Adern oder Leitungen 227 des Kabels 214, beispielsweise durch Löten, elektrisch verbunden. Zwei der Leitungen 227 dienen dabei der Übertragung von Datensignalen. Diese werden ohne Veränderung durch die Platine 224 an den zweiten elektrischen Verbinder 212 durchgeleitet, so dass Datensignale ohne Beeinflussung übertragen werden. Die zwei verbleibenden Leitungen 227 dienen der Übertragung von elektrischer Energie. Diese werden durch die elektronische Schaltung 226 mit den beiden Energieversorgungsleitungen des Kabels 222 so gekoppelt, dass Energie von einer Energiequelle des Fahrzeugs, beispielsweise von einer Batterie, über den Stecker 210 und das Kabel 222 bei Bedarf dazu verwendet werden kann, eine konstante Ausgangsspannung an dem zweiten elektrischen Verbinder 212 bzw. einem damit gekoppelten Consumer Port aufrecht zu erhalten.

Aus der perspektivischen Ansicht der Platine 224 von Fig. 7 ist zudem ersichtlich, dass die Platine 224 zur Aufnahme des zweiten elektrischen Verbinders 212 ausgelegt ist. Auf diese Weise entfällt im Vergleich zu der ersten Ausführungsform 100 bzw. 100' von Fig. 1 - 4 das zweite Kabel 116 sowie die zur elektrischen und mechanischen Verbindung des Kabels 116 mit dem zweiten Verbinder 112 und der Platine 124 notwendigen Verbindungsschritte (z.B. Lötvorgänge). Die zweite Ausführungsform 200 der aktiven elektrischen Koppelvorrichtung kann somit bei gleicher Kabelgesamtlänge kostengünstiger hergestellt werden als die erste Ausführungsform 100 bzw. 100'.

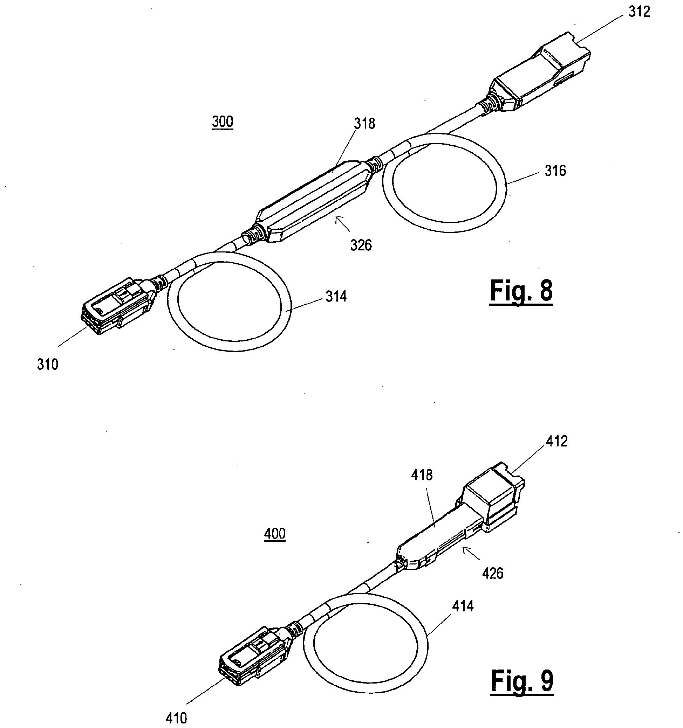

Fig. 8 zeigt eine dritte Ausführungsform 300 der aktiven elektrischen Koppelvorrichtung, die einen ersten elektrischen Verbinder 310 und einen zweiten elektrischen Verbinder 312, aber im Gegensatz zu der ersten Ausführungsform 100 bzw. 100' und der zweiten Ausführungsform 200 keinen dritten elektrischen Verbinder aufweist. Eine in einem Gehäuse 318 untergebrachte elektronische Schaltung 326 ist über ein Kabel 314 mit dem ersten elektrischen Verbinder 310 und über ein Kabel 316 mit dem zweiten elektrischen Verbinder 312 elektrisch verbunden. Die Kabel 314 und 316 weisen jeweils separate Leitungen zur Übertragung von Energie und Datensignalen auf.

Bei der gezeigten dritten Ausführungsform 300 sind die elektrischen Verbinder 310 und 312, die Kabel 314 und 316 sowie das Gehäuse 318 so abgeschirmt, dass elektromagnetische Interferenzen keine störenden Einflüsse auf die aktive elektrische Koppelvorrichtung ausüben können. Zu diesem Zweck kann das Gehäuse 318 beispielsweise aus Kunststoff bestehen, der an der Gehäuseinnenseite mit einer leitfähigen Schicht beschichtet ist oder metallische Partikel enthält, oder aus einem Metall bestehen, um eine möglicht gute Abschirmung zu gewährleisten. Auch ist, ähnlich wie bei den Ausführungsformen 100 bzw. 100' und 200 eine separate Abschirmung in dem Gehäuse möglich.

Die in dem Gehäuse 318 untergebrachte elektronische Schaltung 326 dient dazu, an einem an dem zweiten elektrischen Verbinder 312 angeschlossenen nicht gezeigten Consumer Port eine im Wesentlichen konstante Spannungsversorgung bereitzustellen. Zu diesem Zweck stellt die vorliegende Erfindung einen im Wesentlichen konstanten elektrischen Spannungspegel an dem an den zweiten elektrischen Verbinder 312 angeschlossenen Consumer Port bereit. Der Nutzen dieser Anordnung bei einem Kraftfahrzeug besteht darin, dass ein potentieller Spannungsabfall über der aktiven elektrischen Koppelvorrichtung kompensiert wird und ein an dem zweiten elektrischen Verbinder 312 ggf. über weitere Kabel- und Verbindungselemente angeschlossenes tragbares Gerät für seinen Betrieb somit keine separate Spannungsversorgung benötigt. Bei dieser Ausführungsform der aktiven elektrischen Koppelvorrichtung wird eine elektronische Schaltung 326 verwendet, die wie ein Aufwärtswandler arbeitet. Die aus dem physikalischen Aufbau der aktiven elektrischen Koppelvorrichtung hervorgehenden möglichen Spannungsabfälle über dem ersten Kabel 314, dem zweiten Kabel 316 und einem nicht gezeigten Consumer Port-Anschluss können durch die elektronische Schaltung 326 so kompensiert werden, dass die an dem ersten elektrischen Verbinder 310 anliegende elektrische Spannung ohne Änderung auch an dem Consumer Port anliegt, der an den zweiten elektrischen Verbinder 312 angeschlossen ist.

Eine vierte Ausführungsform 400 der aktiven elektrischen Koppelvorrichtung ist in Fig. 9 gezeigt. Diese Ausführungsform umfasst einen ersten elektrischen Verbinder 410, einen zweiten elektrischen Verbinder 412 und ein diesem benachbartes Gehäuse 418, in dem eine elektronische Schaltung 426 untergebracht ist. Die in dem Gehäuse 418 untergebrachte elektronische Schaltung 426 ist über ein Kabel 414, das mehrere separate Leitungen zur Übertragung von Energie und Datensignalen aufweist, mit dem ersten elektrischen Verbinder 410 elektrisch verbunden. Die elektronische Schaltung 426 ist ferner auf einer Platine angeordnet, die ähnlich wie bei dem in Fig. 7 gezeigten Aufbau auch den zweiten elektrischen Verbinder 412 aufnehmen kann.

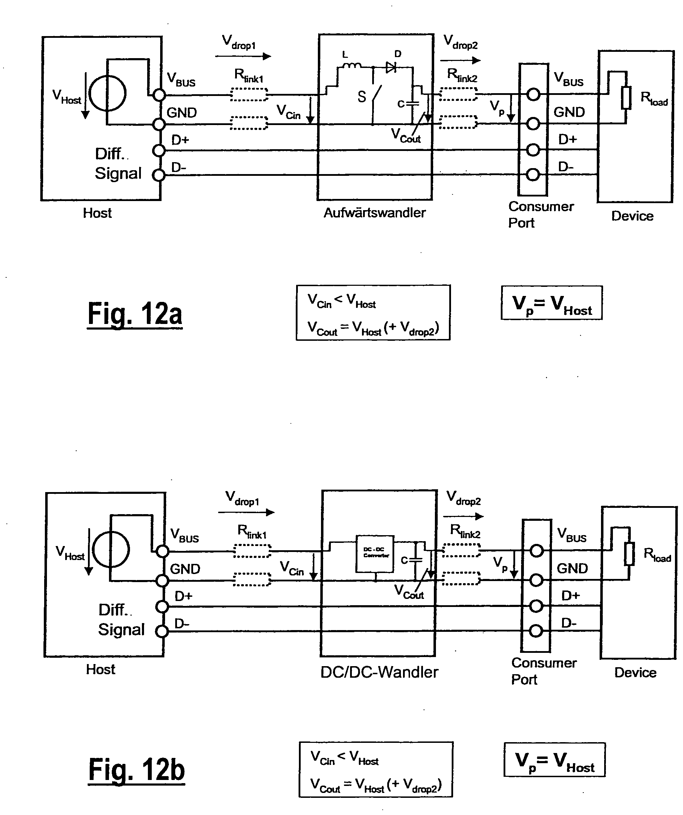

Die Funktion der in dem Gehäuse 418 untergebrachten elektronischen Schaltung 426 stimmt mit der Funktion der in Zusammenhang mit Fig. 8 beschriebenen elektronischen Schaltung 326 überein und wird in Verbindung mit Fig. 12a und 12b genauer erläutert.

Da bei der Ausführungsform 400 der zweite Verbinder 412 mit der in dem Gehäuse 418 untergebrachten elektronischen Schaltung 426 teilweise verschmolzen ist, entfällt im Vergleich zu der dritten Ausführungsform 300 das Kabel 316 sowie zugehörige elektrische Anschlussvorgänge, z.B. Lötvorgänge. Somit kann die Ausführungsform 400 bei gleicher Kabelgesamtlänge kostengünstiger hergestellt werden als die Ausführungsform 300.

Fig. 10 zeigt auf schematische Weise eine elektrische Koppelvorrichtung nach dem Stand der Technik, die zwischen einen "Host", der in diesem Fall einem Unterhaltungssystem eines Kraftfahrzeugs entspricht, und ein "Device", in diesem Fall beispielsweise einen MP3-Player, gekoppelt ist. Der Host legt über zwei Kontakte $V_{BUS}$ und GND an dem ersten elektrischen Verbinder bzw. USB-Anschluss eine Spannung $V_{Host}$ an zwei Leitungen zur Übertragung von Energie der herkömmlichen elektrischen Koppelvorrichtung an. Bei einem USB-Anschluss beträgt die Spannung $V_{Host}$ 5 Volt. An dem "Consumer Port" bzw. dem zweiten elektrischen Verbinder oder USB-Anschluss der herkömmlichen elektrischen Koppelvorrichtung liegt zwischen den entsprechenden Kontakten $V_{BUS}$ und GND eine Spannung Vp an, die aufgrund von gestrichelt dargestellten Leitungswiderständen $R_{link}$ der Leitungen zu Übertragung von Energie geringer als die an der Hostseite anliegende Spannung $V_{Host}$ ist. Nach dem ohmschen Gesetz gilt

$$V_{Host} = V_{drop1} + V_P,$$

wobei $V_{drop1}$ die an dem Leitungswiderstand $R_{link}$ abfallende Spannung ist.

Über zwei weitere Kontakte D+ und D- an dem ersten elektrischen Verbinder bzw. USB-Anschluss werden differentielle Datensignale an zwei Leitungen der Koppelvorrichtung zur Übertragung von Datensignalen angelegt. Die differentielle Datenübertragung wird von dem USB-Standard verwendet, um die Datenübertragung unempfindlicher gegenüber irgendwelchen Störeinflüssen zu gestalten. Die Leitungen zur Übertragung von Datensignalen weisen wie die Leitungen zur Übertragung von Energie ebenfalls einen Leitungswiderstand auf, der aber in diesem Kontext unwesentlich ist und daher nicht weiter betrachtet wird.

Wie aus Fig. 10 hervorgeht, ist bei einer elektrischen Koppelvorrichtung ein gewisser Spannungsabfall $V_{drop1}$ inhärent immer vorhanden. Je nach Größe des Widerstands eines angeschlossenen tragbaren Geräts ("Device") und Anfälligkeit dieses Geräts gegenüber Abweichungen von der erwarteten Spannung ($V_{Host}$) kann sich $V_{drop1}$ mehr oder weniger stark auf den Betrieb des tragbaren Geräts auswirken.

Fig. 11 zeigt einen ersten erfindungsgemäßen Ansatz, der in den Ausführungsformen 100 bzw. 100' und 200 der erfindungsgemäßen aktiven elektrischen Koppelvorrichtung verwendet wird, um den in Fig. 10 erläuterten Spannungsabfall zu kompensieren. In Fig. 11 ist eine "Pufferschaltung" zwischen den Host und den "Consumer Port" eingefügt, wobei der Host-Anschluss dem ersten elektrischen Verbinder 110 bzw. 210 entspricht und der Consumer Port dem zweiten elektrischen Verbinder 112 bzw. 212 entspricht oder mit diesen gekoppelt ist. Wie aus der schematischen Darstellung von Fig. 11 ersichtlich ist, werden die Datenleitungen D+ und D- durch die Pufferschaltung ohne Veränderung hindurchgeleitet. Die zwischen $V_{BUS}$ und GND anliegende Busspannung $V_{Host}$ wird hingegen durch die Pufferschaltung so verändert, dass potentielle Spannungsabfälle an den Leitungen, die in Fig. 11 als $V_{drop1}$ und $V_{drop2}$ bezeichnet sind, kompensiert werden, d.h. dass die Ausgangsspannung $V_{Bout}$ der Pufferschaltung genau um den Betrag erhöht wird, der über die Leitungswiderstände $R_{link1}$ und $R_{link2}$ abfällt. Anders ausgedrückt erhöht die Pufferschaltung ihre Eingangsspannung $V_{Bin}$ um $V_{drop1}$ plus $V_{drop2}$ und erreicht damit, dass die am Consumer Port bzw. dem zweiten elektrischen Verbinder anliegende Spannung Vp gleich der an dem ersten elektrischen Verbinder anliegenden Spannung $V_{Host}$ ist.

Um dies zu erreichen, benötigt die Pufferschaltung von Fig. 11 zusätzliche elektrische Energie, die über den dritten elektrischen Verbinder 120, 120' bzw. 220 und das Kabel 122, 122' bzw. 222 als $V_{batt}$ zugeführt wird.

Da der physikalische Aufbau der aktiven elektrischen Koppelvorrichtung, insbesondere die Länge der Kabel 114, 116 bzw. 214, 216, deren Leitungsquerschnitte und Materialien, und damit deren Leitungswiderstände bekannt sind, kann die Pufferschaltung mit Hilfe einiger weniger Spannungsteiler, Schalttransistoren (z.B. MOSFETs) und Dioden sehr kostengünstig aufgebaut werden.

Das in Fig. 11 gezeigte Schema vernachlässigt den Spannungsabfall $V_{drop1}$ an dem Leitungswiderstand $R_{link1}$, da die Pufferschaltung einen hochohmigen Eingang aufweist und der zu erwartende Spannungsabfall $V_{drop1}$ daher gering ausfallen wird; dies kann bei alternativen Ausführungsformen jedoch anders sein. Daher ist schematisch nur eine "add. Vdrop2 comp.", also eine zusätzliche Kompensation des Spannungsabfalls $V_{drop2}$ an dem Leitungswiderstand $R_{link2}$ angezeigt. Die Kompensation kann bei einer Ausführungsform der Pufferschaltung im Wesentlichen aus einem ohmschen Spannungsteiler bestehen, der die Basis eines Transistors ansteuert. Diesem wird über seinen Kollektoranschluss Energie über einen weiteren Transistor zugeführt, wobei der Betrag der zugeführten Energie (Spannung und Strom) von der Eingangsspannung $V_{Bin}$ der Pufferschaltung gesteuert wird. Somit wird mit einfachen Mitteln eine Kompensation von Spannungsabfällen erreicht, und, da die Spannung $V_{Host}$ geregelt ist, nebenbei auch erreicht, dass die kompensierte Ausgangsspannung, die an dem zweiten elektrischen Verbinder 112 bzw. 212 anliegt, im Wesentlichen ebenfalls geregelt ist.

Der zweite erfindungsgemäße Ansatz besteht darin, einen Aufwärtswandler in die elektrische Koppelvorrichtung zwischen den Host und den Consumer Port von Fig. 10 einzufügen. Fig. 12a zeigt die Verwendung eines einfachen Aufwärtswandlers, der im Wesentlichen aus einer Induktivität L, einer Diode D, einem Kondensator C und einem Schalter S besteht, während in Fig. 12b eine anspruchsvollere Ausgestaltung gezeigt ist, die einen DC/DC-Wandler als Aufwärtswandler einsetzt.

Wenn bei dem Aufwärtswandler von Fig. 12a der Schalter S geschlossen wird, liegt die Eingangsspannung $V_{Cin}$ an der Induktivität L, beispielsweise einer Spule, an und der Strom durch die Induktivität L und damit die dort gespeicherte Energie steigen an. Wenn nun der Schalter S, beispielsweise ein Transistor, geöffnet wird, versucht die Induktivität L, den Stromfluss aufrechtzuerhalten. Die Spannung an dem sekundären Ende der Induktivität L steigt sehr schnell an, bis sie eine Spannung $V_{Cout}$ übersteigt, die an dem Kondensator C anliegt und damit die Diode D durchschaltet, so dass der Stromfluss aus der Induktivität L den Kondensator C aufladen kann. Durch den Stromfluss gibt die Induktivität L ihre Energie an den Kondensator C ab, der sich weiter auflädt und somit die Spannung Vcout erhöht. Durch ein geeignetes Schalten des Schalters S wird somit erreicht, dass die Induktivität L laufend Energie speichert und diese in den Kondensator C "pumpt", wodurch die Ausgangsspannung $V_{Cout}$ über die Eingangsspannung $V_{Cin}$ des Aufwärtswandlers hinaus erhöht wird.

Durch geschicktes Dimensionieren der erwähnten Komponenten des Aufwärtswandlers kann die Ausgangsspannung Vcout so eingestellt werden, dass die potentiellen Spannungsabfälle $V_{drop1}$ und $V_{drop2}$ über die Leitungswiderstände $R_{link1}$ und $R_{link2}$ kompensiert werden, so dass die an dem zweiten elektrischen Verbinder oder Consumer Port anliegende Ausgangsspannung Vp der an dem ersten elektrischen Verbinder anliegenden Eingangsspannung $V_{Host}$ entspricht.

Die in Fig. 12b gezeigte Variante verwendet einen DC/DC-Wandler als Variante des Aufwärtswandlers, wobei der DC/DC-Wandler eine zusätzliche Regelung der Ausgangsspannung an dem zweiten elektrischen Verbinder bereitstellen kann.

Da bei den Ausführungsformen drei und vier bzw. den Schaltungen von Fig. 12a und 12b keine zusätzliche Energie zugeführt wird, ist die verfügbare Energie auf die an dem ersten elektrischen Verbinder bereitgestellte Energie beschränkt. Die Schaltungen von Fig. 12a und 12b kompensieren Spannungsabfälle, um eine konstante Ausgangsspannung bereitzustellen; die zur Funktion der Schaltungen sowie zur Kompensation der Spannungsabfälle benötigte Energie wird der an dem ersten elektrischen Verbinder bereitgestellten Energie entnommen, so dass für das tragbare Gerät (Device) möglicherweise nicht mehr genügend Energie, insbesondere nicht mehr genügend Strom vorhanden ist. Um dieses mögliche Problem zu lösen, kann geprüft werden, ob die aktuellen Beschränkungen hinsichtlich des maximal möglichen Stroms (bei USB 500 mA) bei Kraftfahrzeuganwendungen zu größeren Werten hin verschoben werden können, z.B. auf 750 mA oder 1A.

Bei den vier voranstehend erörterten Ausführungsformen der erfindungsgemäßen aktiven elektrischen Koppelvorrichtung kann der erste elektrische Verbinder jeweils ein USB-Stecker sein und der zweite elektrische Verbinder kann eine oder mehrere USB-Buchsen mit einem oder mehreren USB-Anschlüssen (Ports) umfassen, die unterschiedlichen USB-Buchsennormen entsprechen können, beispielsweise USB-A, USB-B, Mini-USB, etc.

Die erfindungsgemäße aktive elektrische Koppelvorrichtung wurde unter dem Blickwinkel der Verwendung in einem Kraftfahrzeug beschrieben. Selbstverständlich können die beschriebenen Konzepte der Erfindung auch in anderen Gebieten eingesetzt werden, die entsprechende Schnittstellen verwenden, z.B. in der Computertechnik.

**Patentansprüche**

1.  Aktive elektrische Koppelvorrichtung (100, 100', 200, 300, 400) mit

    einem ersten elektrischen Verbinder (110, 210, 310, 410) zur Übertragung von Energie und Datensignalen;
    einem zweiten elektrischen Verbinder (112, 212, 312, 412) zur Übertragung von Energie und Datensignalen; und
    einer Anzahl von Leitungen (114, 116, 214, 314, 316, 414), die sich zwischen dem ersten elektrischen Verbinder und dem zweiten elektrischen Verbinder erstrecken und mit diesen elektrisch verbunden sind, wobei die Übertragung von Energie und Datensignalen über separate Leitungen erfolgt,

    **dadurch gekennzeichnet, dass**
    die aktive elektrische Koppelvorrichtung eine zwischen den ersten elektrischen Verbinder und den zweiten elektrischen Verbinder geschaltete elektronische Schaltung (126, 226, 326, 426) aufweist, die mit Leitungen der Anzahl von Leitungen zur Übertragung von Energie verbunden und ausgestaltet ist, um an dem zweiten elektrischen Verbinder eine Ausgangspannung aufrecht zu erhalten, **dadurch gekennzeichnet, dass** die Ausgangsspannung eine konstante Ausgangsspannung ist, die mindestens einer Eingangsspannung entspricht, die an dem ersten elektrischen Verbinder anliegt.

2.  Aktive elektrische Koppelvorrichtung (100, 100', 200) nach Anspruch 1,
    **dadurch gekennzeichnet, dass**
    die aktive elektrische Koppelvorrichtung ferner einen dritten elektrischen Verbinder (120, 120', 220) aufweist, der mit der elektronischen Schaltung (126, 226) zur Spannungsversorgung elektrisch verbunden ist.

3.  Aktive elektrische Koppelvorrichtung (100, 100', 200) nach Anspruch 2,
    **dadurch gekennzeichnet, dass**
    der dritte elektrische Verbinder (120, 120', 220) geeignet ist, um die elektronische Schaltung (126, 226) mit einer zusätzlichen Spannung zu versorgen.

4.  Aktive elektrische Koppelvorrichtung (100, 100', 200) nach Anspruch 3,
    **dadurch gekennzeichnet, dass**
    die elektronische Schaltung (126, 226) eine Pufferschaltung umfasst, welche eingerichtet ist, um die Ausgangsspannung an dem zweiten elektrischen Verbinder (112, 212) nach Bedarf unter Verwendung der zusätzlichen Spannung so zu steuern, dass sie mindestens der Eingangsspannung an dem ersten elektrischen Verbinder (110, 210) entspricht.

5.  Aktive elektrische Koppelvorrichtung (100, 100', 200) nach Anspruch 4,
    **dadurch gekennzeichnet, dass**
    die Pufferschaltung eingerichtet ist, um einen Spannungsabfall zwischen der Eingangsspannung an dem ersten elektrischen Verbinder (110, 210) und einer Eingangsspannung der elektronischen Schaltung (126, 226) zu kompensieren.

6.  Aktive elektrische Koppelvorrichtung (100, 100', 200) nach Anspruch 4 oder 5,
    **dadurch gekennzeichnet, dass**
    die Pufferschaltung eingerichtet ist, um einen Spannungsabfall zwischen einer Ausgangsspannung der elektronischen Schaltung (126, 226) und der Ausgangsspannung an dem zweiten elektrischen Verbinder (112, 212) zu kompensieren.

7.  Aktive elektrische Koppelvorrichtung (100, 100', 200) nach Anspruch 5,
    **dadurch gekennzeichnet, dass**
    die Pufferschaltung eine Spannungsfolgerschaltung umfasst.

8.  Aktive elektrische Koppelvorrichtung (100, 100', 200) nach einem der voranstehenden Ansprüche,
    **dadurch gekennzeichnet, dass**
    die zusätzliche Spannung zumindest mittelbar von einer Fahrzeugbatterie stammt.

9.  Aktive elektrische Koppelvorrichtung (300, 400) nach Anspruch 1,
    **dadurch gekennzeichnet, dass**
    die elektronische Schaltung (326, 426) einen Aufwärtswandler umfasst.

10. Aktive elektrische Koppelvorrichtung (300, 400) nach Anspruch 9,

**dadurch gekennzeichnet, dass**
der Aufwärtswandler eingerichtet ist, um einen Spannungsabfall zwischen der Eingangsspannung an dem ersten elektrischen Verbinder (310, 410) und einer Eingangsspannung an der elektronischen Schaltung (326, 426) zu kompensieren.

11. Aktive elektrische Koppelvorrichtung (300, 400) nach Anspruch 9 oder 10,
**dadurch gekennzeichnet, dass**
der Aufwärtswandler eingerichtet ist, um einen Spannungsabfall zwischen einer Ausgangsspannung der elektronischen Schaltung (326, 426) und der Ausgangsspannung an dem zweiten elektrischen Verbinder (312, 412) zu kompensieren, und wobei der Aufwärtswandler vorzugsweise einen DC/DC-Wandler umfasst, welcher eingerichtet ist, um die Ausgangsspannung zu regeln.

12. Aktive elektrische Koppelvorrichtung (100, 100', 200, 300, 400) nach einem der voranstehenden Ansprüche,
**dadurch gekennzeichnet, dass**
die Anzahl der Leitungen (114, 116, 214, 314, 316, 414) vier beträgt, von denen zwei zur Übertragung von Energie und zwei zur Übertragung von Datensignalen dienen.

13. Aktive elektrische Koppelvorrichtung (100, 100', 200, 300, 400) nach einem der voranstehenden Ansprüche,
**dadurch gekennzeichnet, dass**
der erste elektrische Verbinder (110, 210, 310, 410) als USB-Verbinder, vorzugsweise als USB-Stecker, ausgebildet ist und/oder der zweite elektrische Verbinder (112, 212, 312, 412) als USB-Verbinder, vorzugsweise als USB-Buchse, ausgebildet ist.

14. Aktive elektrische Koppelvorrichtung (100, 100', 200, 300, 400) nach einem der voranstehenden Ansprüche,
**dadurch gekennzeichnet, dass**
die elektronische Schaltung (126, 226, 326, 426) eingerichtet ist, um Datensignale von Leitungen zur Übertragung von Datensignalen unverändert durchzuleiten.

15. Aktive elektrische Koppelvorrichtung (100, 100', 200, 300, 400) nach einem der voranstehenden Ansprüche,
**dadurch gekennzeichnet, dass**
die aktive elektronische Koppelvorrichtung zum Schutz vor elektromagnetischen Störungen eine vollständige EMV-Schirmung aufweist.

**Claims**

1. Active electrical coupling device (100, 100', 200, 300, 400) having
a first electrical connector (110, 210, 310, 410) for transmitting power and data signals;
a second electrical connector (112, 212, 312, 412) for transmitting power and data signals; and
a number of lines (114, 116, 214, 314, 316, 414) extending between the first electrical connector and the second electrical connector and electrically connected therewith, the transmission of power and data signals being via separate lines,
**characterized in that**
the active electrical coupling device comprises an electronic circuit (126, 226, 326, 426) connected between the first electrical connector and the second electrical connector, which is connected with lines of the number of lines for transmitting power and adapted to maintain an output voltage at the second electrical connector, **characterized in that** the output voltage is a constant output voltage corresponding to at least one input voltage applied to the first electrical connector.

2. Active electrical coupling device (100, 100', 200) according to claim 1,
**characterized in that**
the active electrical coupling device further comprises a third electrical connector (120, 120', 220) electrically connected to the electronic circuit (126, 226) for voltage supply.

3. Active electrical coupling device (100, 100', 200) according to claim 2,
**characterized in that**
the third electrical connector (120, 120', 220) is adapted to provide the electronic circuit (126, 226) with additional voltage.

4. Active electrical coupling device (100, 100', 200) according to claim 3,
**characterized in that**
the electronic circuit (126, 226) includes a buffer circuit which is adapted to control the output voltage at the second electrical connector (112, 212) using the additional voltage, as required, so that it corresponds to at least the input voltage to the first electrical connector (110, 210).

5. Active electrical coupling device (100, 100', 200) according to claim 4,
**characterized in that**
the buffer circuit is adapted to compensate a voltage drop between the input voltage at the first electrical connector (110, 210) and an input voltage of the electronic circuit (126, 226).

**6.** Active electrical coupling device (100, 100', 200) according to claim 4 or 5,
**characterized in that**
the buffer circuit is adapted to compensate a voltage drop between an output voltage of the electronic circuit (126, 226) and the output voltage at the second electrical connector (112, 212).

**7.** Active electrical coupling device (100, 100', 200) according to claim 5,
**characterized in that**
the buffer circuit includes a voltage follower circuit.

**8.** Active electrical coupling device (100, 100', 200) according to one of the preceding claims,
**characterized in that**
the additional voltage originates at least indirectly from a vehicle battery.

**9.** Active electrical coupling device (300, 400) according to claim 1,
**characterized in that**
the electronic circuit (326, 426) includes a boost-converter.

**10.** Active electrical coupling device (300, 400) according to claim 9,
**characterized in that**
the boost converter is adapted to compensate a voltage drop between the input voltage at the first electrical connector (310, 410) and an input voltage at the electronic circuit (326, 426).

**11.** Active electrical coupling device (300, 400) according to claim 9 or 10,
**characterized in that**
the boost-converter is adapted to compensate a voltage drop between an output voltage of the electronic circuit (326, 426) and the output voltage at the second electrical connector (312, 412), and wherein the boost-converter preferably includes a DC/DC converter adapted to regulate the output voltage.

**12.** Active electrical coupling device (100, 100', 200, 300, 400) according to one of the preceding claims,
**characterized in that**
the number of lines (114, 116, 214, 314, 316, 414) is four, only two of which are for the transmission of power and two are for the transmission of data signals.

**13.** Active electrical coupling device (100, 100', 200, 300, 400) according to one of the preceding claims,
**characterized in that**
the first electrical connector (110, 210, 310, 410) is formed as USB connector, preferably as USB plug, and/or the second electrical connector (112, 212, 312, 412) is formed as USB connector, preferably as USB socket.

**14.** Active electrical coupling device (100, 100', 200, 300, 400) according to any one of the preceding claims,
**characterized in that**
the electronic circuit (126, 226, 326, 426) is adapted to pass data signals from lines for transmission of data signals unaltered.

**15.** Active electrical coupling device (100, 100', 200, 300, 400) according to one of the preceding claims,
**characterized in that**
the active electronic coupling device comprises a complete EMC shielding for protection against electromagnetic interference.

**Revendications**

**1.** Dispositif de couplage électrique actif (100, 100', 200, 300, 400), comprenant
un premier connecteur électrique (110, 210, 310, 410) pour transmettre de l'énergie et des signaux de données ;
un second connecteur électrique (112, 212, 312, 412) pour transmettre de l'énergie et des signaux de données ; et
un certain nombre de lignes (114, 116, 214, 314, 316, 414) qui s'étendent entre le premier connecteur électrique et le second connecteur électrique et qui sont connectées électriquement à ceux-ci, la transmission d'énergie et de signaux de données s'effectuant par des lignes séparées,
**caractérisé en ce que**
le dispositif de couplage électrique actif comprend un circuit électronique (126, 226, 326, 426) branché entre le premier connecteur électrique et le second connecteur électrique, qui est connecté à des lignes dudit nombre de lignes pour la transmission d'énergie et qui est conçu pour maintenir une tension de sortie au niveau du second connecteur électrique,
**caractérisé en ce que**
la tension de sortie est une tension de sortie constante qui correspond au moins à une tension d'entrée appliquée au premier connecteur électrique.

**2.** Dispositif de couplage électrique actif (100, 100', 200) selon la revendication 1,
**caractérisé en ce que**
le dispositif de couplage électrique actif comprend en outre un troisième connecteur électrique (120, 120', 220) qui est électriquement connecté au circuit électronique (126, 226) pour l'alimentation en tension.

**3.** Dispositif de couplage électrique actif (100, 100', 200) selon la revendication 2,

**caractérisé en ce que**

le troisième connecteur électrique (120, 120', 220) est apte à alimenter le circuit électronique (126, 226) avec une tension supplémentaire.

4. Dispositif de couplage électrique actif (100, 100', 200) selon la revendication 3,
**caractérisé en ce que**
le circuit électronique (126, 226) comprend un circuit tampon qui est conçu pour commander la tension de sortie au niveau du second connecteur électrique (112, 212) selon les besoins en utilisant la tension supplémentaire de telle sorte qu'elle correspond au moins à la tension d'entrée au niveau du premier connecteur électrique (110, 210).

5. Dispositif de couplage électrique actif (100, 100', 200) selon la revendication 4,
**caractérisé en ce que**
le circuit tampon est conçu pour compenser une chute de tension entre la tension d'entrée au niveau du premier connecteur électrique (110, 210) et une tension d'entrée du circuit électronique (126, 226).

6. Dispositif de couplage électrique actif (100, 100', 200) selon la revendication 4 ou 5,
**caractérisé en ce que**
le circuit tampon est conçu pour compenser une chute de tension entre une tension de sortie du circuit électronique (126, 226) et la tension de sortie au niveau du second connecteur électrique (112, 212).

7. Dispositif de couplage électrique actif (100, 100', 200) selon la revendication 5,
**caractérisé en ce que**
le circuit tampon comprend un circuit suiveur de tension.

8. Dispositif de couplage électrique actif (100, 100', 200) selon l'une des revendications précédentes,
**caractérisé en ce que**
la tension supplémentaire est issue au moins indirectement d'une batterie de véhicule.

9. Dispositif de couplage électrique actif (300, 400) selon la revendication 1,
**caractérisé en ce que**
le circuit électronique (326, 426) comprend un convertisseur élévateur.

10. Dispositif de couplage électrique actif (300, 400) selon la revendication 9,
**caractérisé en ce que**
le convertisseur élévateur est conçu pour compenser une chute de tension entre la tension d'entrée au niveau du premier connecteur électrique (310, 410) et une tension d'entrée au niveau du circuit électronique (326, 426).

11. Dispositif de couplage électrique actif (300, 400) selon la revendication 9,
**caractérisé en ce que**
le convertisseur élévateur est conçu pour compenser une chute de tension entre une tension de sortie du circuit électronique (326, 426) et la tension de sortie au niveau du second connecteur électrique (312, 412), et
le convertisseur élévateur comprend de préférence un convertisseur continu-continu qui est conçu pour réguler la tension de sortie.

12. Dispositif de couplage électrique actif (100, 100', 200, 300, 400) selon l'une des revendications précédentes,
**caractérisé en ce que**
le nombre de lignes (114, 116, 214, 314, 316, 414) est de quatre dont deux servent à la transmission d'énergie et dont deux servent à la transmission de signaux de données.

13. Dispositif de couplage électrique actif (100, 100', 200, 300, 400) selon l'une des revendications précédentes,
**caractérisé en ce que**
le premier connecteur électrique (110, 210, 310, 410) est réalisé sous forme de connecteur USB, de préférence sous forme de fiche mâle USB, et/ou
le second connecteur électrique (112, 212, 312, 412) est réalisé sous forme de connecteur USB, de préférence sous forme de fiche femelle USB.

14. Dispositif de couplage électrique actif (100, 100', 200, 300, 400) selon l'une des revendications précédentes,
**caractérisé en ce que**
le circuit électronique (126, 226, 326, 426) est conçu pour faire passer de façon inchangée des signaux de données par des fils de transmission de signaux de données.

15. Dispositif de couplage électrique actif (100, 100', 200, 300, 400) selon l'une des revendications précédentes,
**caractérisé en ce que**
le dispositif de couplage électronique actif comprend un blindage CEM complet pour la protection contre des perturbations électromagnétiques.

112

118

100

116

122

Fig. 1

110

114

120

118'

116

100'

114

122'

Fig. 2

120'

**Fig. 3**

**Fig. 4**

218
200
212

**Fig. 5**

222

210

214

220

226
200
225
212

232
227
214

224

**Fig. 6**

230

222

214

224

222

Fig. 7

312

300 318

316

326

314

310

**Fig. 8**

412

418

400

426

414

410

**Fig. 9**

$V_{drop1}$

$R_{link}$

$V_{BUS}$
GND
D+
D-

$V_{Host}$

Differentielles Signal

Host

$V_P$

$V_{BUS}$
GND
D+
D-

$R_{load}$

Consumer
Port

Device

$V_P < V_{Host}$

**Fig. 10**

$V_{batt}$

$V_{ref}$

add.
$V_{drop2}$
comp.

$V_{drop1}$

$R_{link1}$

$V_{Host}$

Differentielles Signal

Host

$V_{Bin}$

$V_{Bout}$

$V_{drop2}$

$R_{link2}$

$V_p$

$V_{BUS}$
GND
D+
D-

$V_{BUS}$
GND
D+
D-

$R_{load}$

Pufferschaltung

Consumer
Port

Device

$V_{Bin} = V_{Host}$

$V_{Bout} = V_{Bin} (+ V_{drop2})$

$V_p = V_{Host}$

**Fig. 11**

## Fig. 12a

$$V_{Cin} < V_{Host}$$
$$V_{Cout} = V_{Host} (+ V_{drop2})$$

$$V_p = V_{Host}$$

## Fig. 12b

$$V_{Cin} < V_{Host}$$
$$V_{Cout} = V_{Host} (+ V_{drop2})$$

$$V_p = V_{Host}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0217460 A1